(19) 

**Europäisches Patentamt**
**European Patent Office**
**Office européen des brevets**

(11) **EP 4 478 625 A2**

(12) **EUROPEAN PATENT APPLICATION**

(43) Date of publication:
**18.12.2024 Bulletin 2024/51**

(21) Application number: **24176649.2**

(22) Date of filing: **17.05.2024**

(51) International Patent Classification (IPC):
***H04B 7/06*** (2006.01)

(52) Cooperative Patent Classification (CPC):
**H04B 7/0626; H04B 7/0632; H04B 7/0639;**
**H04B 7/0658**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 US 202363503821 P**
**08.04.2024 US 202418629244**

(71) Applicant: **Samsung Electronics Co., Ltd.**
**Suwon-si, Gyeonggi-do 16677 (KR)**

(72) Inventors:
• **HU, Liang**
**San Jose, CA, 95134 (US)**
• **SARTORI, Philippe Jean Marc Michel**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **TECHNIQUES FOR ENHANCED MULTI-CSI REPORT FOR SPATIAL AND POWER DOMAIN ADAPTATION**

(57) A method performed by a user equipment (UE) in a wireless communication system is provided. The method includes receiving channel state information (CSI) reporting configuration information with a plurality of sub-configurations for CSI reporting; and determining a CSI processing unit for a plurality of spatial adaptation patterns based on the CSI reporting configuration information, wherein determining the CSI processing unit comprises performing a compilation operation of a number of CSI-reference signal (RS) resources corresponding to each spatial adaptation pattern for the plurality of sub-configurations.

100

Controller module
101

Antenna module
103

Storage module
102

FIG. 1

EP 4 478 625 A2

**Description**

TECHNICAL FIELD

The disclosure generally relates to network energy saving in cellular systems.

BACKGROUND

The ever-increasing demand for data within cellular systems is leading to higher network power consumption, which significantly impacts the operational expenses of deployed networks. To address this concern, especially for new radio (NR) in the 3rd Generation Partnership Project (3GPP) release 18, investigations have started on reducing power consumption on the network side. Until now, the focus was primarily on reducing user equipment (UE) power consumption to extend battery life, while network consumption received less attention. A notable method for energy saving is the reduction in the number of antenna panels a network node (e.g., a gNodeB (gNB)) uses during lower traffic demands, which can significantly decrease power consumption. This process, however, requires a level of UE involvement that changes the channel state information (CSI) reporting needs. Current standards provide for some adaptability, but they include cumbersome mechanisms and excessive signaling, such as the need to report CSI for multiple antenna configurations, leading to substantial signaling overhead.

To solve this problem, prior solutions have allowed for some degree of flexibility in CSI reporting; however, these solutions are not efficient enough in terms of signaling overhead and do not fully exploit the potential for energy savings through spatial and power domain adaptation. The complexity of simultaneous multiple CSI reporting imposes significant constraints on a UE, potentially affecting performance.

One issue with the above approach is the inefficient use of signaling resources and the increased complexity for a UE, which can limit the system's overall performance and responsiveness to dynamic network conditions. This complexity challenges the network's ability to quickly and optimally decide on spatial and/or power domain adaptations, which is crucial for achieving energy savings without compromising service quality.

SUMMARY

To overcome these issues, systems and methods are described herein for an enhanced multi-CSI report mechanism that supports spatial and power domain adaptation with reduced complexity and signaling overhead. The disclosure proposes four enhancements: (1) an enhanced CSI-ReportConfig radio resource control (RRC) information element (IE) that supports multi-CSI reporting for Type I and Type II spatial adaptation patterns as well as power domain adaptation, (2) an enhanced CSI report timeline for multi-CSI reporting on multiple occasions, (3) a reduction in CSI report overhead for multi-CSI reporting in a single occasion, and (4) a set of multi-CSI report priority and dropping rules. These enhancements are built upon a framework that includes steps for dynamic adaptation through CSI measurement and reporting on multiple spatial patterns and power hypotheses, selection of optimal patterns by the gNB, and dynamic indication of the chosen spatial pattern for future CSI measurements and data transmission reports.

The above approaches improve on previous methods by reducing the signaling overhead associated with CSI reporting, simplifying the process for a UE, and allowing for more efficient and dynamic network adaptations. This leads to significant energy savings for the network without compromising the quality of service, addressing the operational expense concerns related to power consumption in next-generation cellular networks.

In an embodiment, a method performed by a UE in a wireless communication system is provided. The method includes receiving CSI reporting configuration information with a plurality of sub-configurations for CSI reporting; and determining a CSI processing unit for a plurality of spatial adaptation patterns based on the CSI reporting configuration information, wherein determining the CSI processing unit comprises performing a compilation operation of a number of CSI-reference signal (RS) resources corresponding to each spatial adaptation pattern for the plurality of sub-configurations.

In another embodiment, a UE is provided and includes a memory device, and a processor configured to execute instructions stored on the memory device. The instructions, when executed, cause the processor to receive CSI reporting configuration information with a plurality of sub-configurations for CSI reporting; and determine a CSI processing unit for a plurality of spatial adaptation patterns based on the CSI reporting configuration information, wherein determining the CSI processing unit comprises performing a compilation operation of a number of CSI- RS resources corresponding to each spatial adaptation pattern for the plurality of sub-configurations.

In another embodiment, a method performed by a base station in a wireless communication system is provided. The method includes receiving UE capability information from a UE; and transmitting CSI reporting configuration information with a plurality of sub-configurations for CSI reporting in response to the received UE capability information, wherein a CSI processing unit is determined by performing a compilation operation of a number of CSI-RS resources corresponding to each spatial adaptation pattern for the plurality of sub-configurations.

In another embodiment, a base station is provided including a memory device, and a processor configured to execute instructions stored on the memory device. The instructions, when executed, cause the processor to receive UE capability information from a UE; and transmit CSI reporting configuration information with a plurality of sub-configurations for CSI reporting in response to the received UE capability information, wherein a CSI processing unit is determined by performing a compilation operation of a number of CSI-RS resources corresponding to each spatial adaptation pattern for the plurality of sub-configurations.

BRIEF DESCRIPTION OF THE DRAWING

In the following section, the aspects of the subject matter disclosed herein will be described with reference to exemplary embodiments illustrated in the figures, in which:

FIG. 1 is a transmitting device or a receiving device in a communication system, according to an embodiment;
FIGS. 2(a)-2(b) are diagrams comparing NR Type-1 codebook design with NR Type-II codebook design, according to an embodiment;
FIG. 3 is a table illustrating content and quantity of parameters included in a CSI report, according to an embodiment;
FIG. 4 is a block diagram illustrating how a UE can be set up to respond to various trigger states for CSI reporting, according to an embodiment;
FIG. 5 is a block diagram illustrating how a UE can be set up to respond to various trigger states for CSI reporting, according to an embodiment;
FIG. 6 is a flowchart illustrating a procedure for multi-CSI reporting, according to an embodiment;
FIG. 7 illustrates an extended timeline of the enhanced CSI reporting mechanism for measuring aperiodic CSI RS (AP-CSI-RS) resources, according to an embodiment;
FIG. 8 illustrates an extended timeline of the enhanced CSI reporting mechanism for measuring periodic CSI RS (P-CSI-RS) resources, according to an embodiment;
FIG. 9 illustrates an extended timeline of the enhanced CSI reporting mechanism for measuring P-CSI-RS resources, according to an embodiment;
FIG. 10 is a block diagram of an electronic device in a network environment, according to an embodiment; and
FIG. 11 shows a system including a UE and a gNB in communication with each other, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

The present disclosure relates to a method that allows a phone or device to communicate more effectively with a cell tower, especially when dealing with multiple signals or channels. The device can receive instructions on how to report the condition of multiple signal paths, decide the best way to do this, and then send this information back to the network. If there are too many signals to report at once, the device can figure out which ones are most important and just report those. This method helps the network understand and adapt to how signals are being received by the device, which can improve call quality and data speed.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

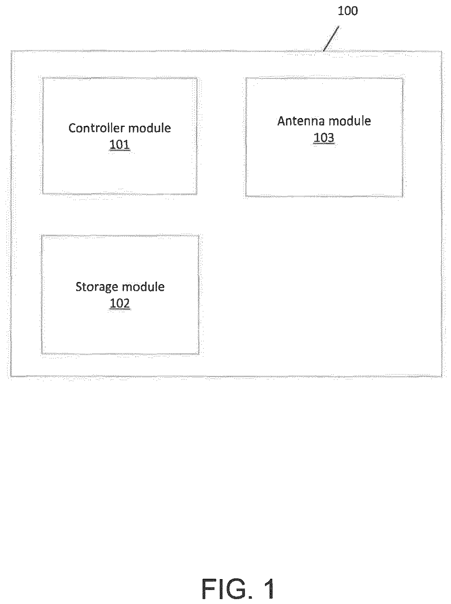

FIG. 1 is a transmitting device or a receiving device in a communication system, according to an embodiment.

Referring to FIG. 1, the device 100 may be a UE (e.g., a client device) or a base station (e.g., a gNB) and includes a controller module 101 (e.g., a processor), a storage module 102, and an antenna module 103.

The controller module 101, storage module 102, and antenna module 103 may be structural components to facilitate efficient and accurate transmission or reception of wireless signals.

The controller module 101 may include at least one processor and may execute instructions that are stored in the storage module 102. For example, the controller module 101 may execute instructions for performing signaling techniques described herein. In addition, the controller module 101 may include a digital signal processor (DSP) for performing signal processing on a signal. The DSP may include one or more processing modules for functions such as synchronization, equalization, and demodulation. The processing modules may be implemented using one or more DSP techniques, such as fast Fourier transform (FFT), inverse FFT (IFFT), and digital filtering. Additionally or alternatively, the controller module 101 may include an application processor for running user applications on the device 100, such as web browsers, video players, and other software applications. The application processor may include one or more processing units, memory devices, and input/output interfaces.

The storage module 102 may include transitory or non-transitory memory storing instructions that, when executed, cause the controller module 101 to perform steps to execute signaling techniques described herein. In addition, the storage module 102 may include a protocol stack for implementing communication protocols. The protocol stack may include one or more layers, such as a physical layer, a medium access control (MAC) layer, a radio link control (RLC) layer, and a packet data convergence protocol (PDCP) layer.

The antenna module 103 may include one or more antennas for wirelessly transmitting and receiving signals to a base station, UE or another device. For example, the antenna module 103 may receive a signal transmitted by a base station and convert it into an electrical signal.

The device 100 may be a receiver of a wireless communication system (e.g., the UE in a 5G NR system) in downlink, i.e., the UE receives and demodulates data transmitted by the gNB. In addition, the device 100 may also transmit a signal via the antenna module 103 and, therefore, may be a transmitter or a gNB.

In the context of 5G NR, the advancement and sophistication of codebook designs play a pivotal role in optimizing communication efficiency and enhancing network performance. The 5G NR standard defines two primary types of codebooks, each having specific operational requirements and enabling control over signal processing and beamforming techniques. These codebooks are integral to the CSI reporting process, facilitating efficient communication between UE and the network, particularly in complex scenarios like multi-user multiple input multiple output (MIMO) (MU-MIMO).

The Type I codebook in 5G NR is based on the long-term evolution (LTE) codebook, embodying a similar foundational logic but extending its capabilities to support more applications. The Type I codebook utilizes a set of predefined matrices, which are selected based on the UE reports and RRC configurations. These predefined matrices offer a structured approach to beamforming, where the selection process is streamlined through the standardized options available within the codebook. Type I enables efficient beam selection while accommodating the diverse operational scenarios encountered in 5G networks.

In contrast, the Type II codebook represents a significant departure from the predefined approach of Type I. Instead, it relies on numerous parameters, which are determined through a combination of RRC directives and UE reporting. This formula-centric approach allows for a highly flexible and dynamic adaptation of the precoding matrix, tailoring beamforming to specific network conditions and user demands. The Type II codebook features a singular table that underscores the framework governing the precoding matrix's configuration. Type II is particularly well-suited for applications in MU-MIMO, where the intricate interplay of multiple user signals demands an adaptive beamforming strategy.

Both Type I and Type II codebooks are constructed upon a two dimensional (2D) discrete fourier transform (DFT) based grid of beams, underscoring the importance of spatial granularity and precision in 5G beamforming. This DFT-based grid facilitates the CSI feedback mechanism, enabling not just the selection of optimal beams but also the phase shift keying (PSK) based co-phase combining between dual polarizations, enhancing signal integrity and efficiency.

A distinction between the two codebook types lies in their approach to CSI feedback. While Type I codebook-based feedback primarily defines the phase of the selected beam, lacking amplitude details, Type II codebook-based feedback goes a step further by incorporating wideband and subband amplitude information of the selected beams. This additional layer of detail provided by Type II enhances the network's ability to fine-tune its beamforming strategies, optimizing signal strength and quality across varying conditions and user requirements.

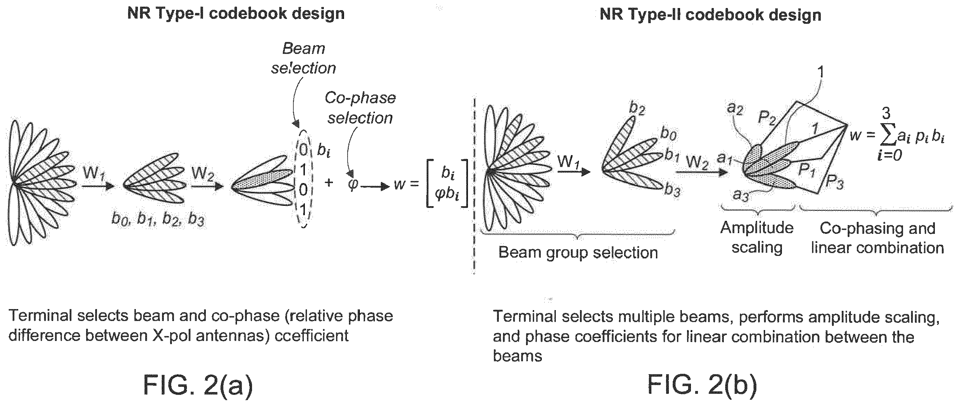

FIGS. 2(a)-2(b) are diagrams comparing NR Type-1 codebook design with NR Type-II codebook design, according to an embodiment.

Referring to FIG. 2(a), in the case of NR Type-I codebook design, a terminal (e.g., a UE) selects a beam and co-phase (relative phase difference between X-pol antennas) coefficient.

Referring to FIG. 2(b), in the case of NR Type-II codebook design, a terminal selects multiple beams, performs amplitude scaling, and selects phase coefficients for linear combination between beams.

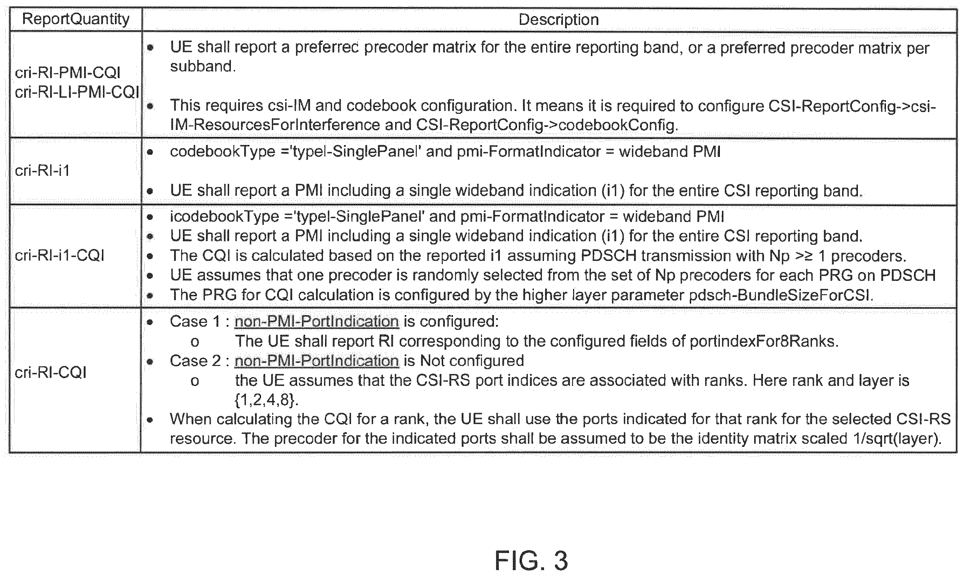

FIG. 3 is a table illustrating content and quantity of parameters included in a CSI report, according to an embodiment.

Referring to FIG. 3, possible behavior of the UE, gNB or other network components are described under the Description heading based on ReportQuantity parameters. The Description and ReportQuantity parameters illustrated in FIG. 3 are for illustrative purposes, and CSI reports having varying parameters and/or behavior may be used in accordance with the multi-CSI reporting solutions described herein.

The reported parameters of CSI reports may be encoded in uplink control information (UCI) and mapped to either the physical uplink shared channel (PUSCH) or the physical uplink control channel (PUCCH), and the encoding format used may differ depending both on the physical channel used and the frequency-granularity of the CSI reports. The reason for the different encoding schemes is that the payload size of the CSI generally varies with the UE selection of channel quality indicator (CQI) and rank indicator (RI). That is, the codebook size for precoding matrix indicator (PMI) reporting is different for different ranks, such as for Type II CSI reporting and subband PMI reporting in general, where it can vary drastically. Similarly, as one codeword is used up to rank-4 and two codewords are used for higher ranks, the number of CQI parameters (which is given per codeword) included in the CSI report will vary depending on the selection of rank.

For PUCCH-based CSI reporting with wideband frequency-granularity, the variation of PMI/CQI payload depending on the selected rank is not too large and therefore a single packet encoding of all CSI parameters in UCI is used. Since the next-generation gNB should know the payload size of the UCI in order to try to decode the transmission, the UCI is padded with a number of dummy bits corresponding to the difference between the maximum UCI payload size (i.e., corresponding to the RI which results in the largest PMI/CQI overhead) and the actual payload size of the CSI report. This ensures that the payload size is fixed irrespective of the UE's RI selection. If this measure was not taken, the gNB would have to blindly detect the UCI payload size and try to decode for all possible UCI payload sizes, which is not feasible.

However, for PUCCH-based CSI with subband frequency-granularity as well as PUSCH-based CSI reporting, padding the CSI report to the worst-case UCI payload size each time would result in too large an overhead. For these cases, the CSI content is instead divided into two CSI Parts, CSI Part 1 and CSI Part 2, where CSI Part 1 has a fixed payload size (and can be decoded by the gNB without prior information) but where CSI Part 2 has a variable payload size. The information about the payload size of CSI Part 2 can be derived from the CSI parameters in CSI Part 1. That is, the gNB first decodes CSI Part 1 to obtain a subset of the CSI parameters, based on these CSI parameters, the payload size of CSI Part 2 can be inferred, and CSI Part 2 can be subsequently decoded to obtain the remainder of the CSI parameters.

For PUCCH-based subband CSI reports and PUSCH-based reports with Type I CSI feedback, the CSI Part 1 includes RI (if reported), cell ranking indicator (CRI) (if reported), and CQI for the first codeword while CSI Part 2 contains PMI and the CQI for the second codeword when RI>4. For Type II CSI feedback on PUSCH, CSI Part 2 includes an indication of the number of "non-zero wideband amplitude coefficients" per layer. The wideband amplitude coefficient is part of the Type II codebook and depending on if a coefficient is zero or not, the PMI payload size will vary, which is why an indication of the number of non-zero such coefficients should be included in CSI Part 1. For beam reporting of Layer 1 reference signal received power (L1-RSRP), a single part encoding is also used since the payload size cannot vary.

For PUSCH-based CSI reporting and Type II CSI reporting in particular, the CSI payload size can vary quite dramatically depending on the rank indicator (RI) selection. For instance, for Type II reporting, the PMI payload for RI=2 is almost double to that of RI=1. Since the RI selection is not known to the gNB prior to scheduling an aperiodic CSI report on the PUSCH, the gNB has to allocate PUSCH resources (e.g., in the frequency and time domains) by using a best guess of the RI selection to the UE, perhaps by looking at historic RI reports. Thus, the gNB may allocate PUSCH resources with the assumption that the UE will report RI = 1, but the UE actually reports RI = 2. In that case, the CSI payload may not fit in the PUSCH container, i.e., the code rate will be too large or even the un-coded systematic bits will not fit. Instead of dropping the entire CSI report in this case, which would be quite wasteful, NR introduces schemes of partial CSI omission, where a portion of the CSI (which can provide some utility to the gNB and at least give information about the RI selection so that the gNB can allocate a proper PUSCH resource for the next aperiodic CSI request) can still be reported.

This is accomplished by ordering the CSI content in CSI Part 2 in a particular fashion. If multiple CSI reports are transmitted in the PUSCH, the wideband CSI components (i.e., the wideband PMI and CQI) for all the reports are mapped to the most significant bits of the UCI. Then, the subband CSI for each report are mapped according to the previously described priority rules, where the subband CSI for even numbered subbands are mapped first, followed by subband CSI for the odd numbered subbands.

If the resulting code rate of the UCI is above a threshold, a portion of the least significant UCI bits are omitted, until the code rate falls below the threshold. This means that subband CSI for odd numbered subbands for a report are omitted first. The motivation is that the gNB in this case would have subband PMI and CQI for every other subband in the frequency domain and can therefore interpolate the PMI/CQI between two reported subbands to try to estimate the missing PMI/CQI values for the subband in the middle. While this will not result in perfect reconstruction, it is better than omitting CSI for an entire set of consecutive subbands.

For two overlapping PUSCHs, priority rules may be applied for physical channels with the same priority index.

CSI reports may be associated with a priority value based on Equation 1, below.

$$\mathrm{Pri}_{iCSI}(y, k, c, s) = 2 \cdot N_{cells} \cdot M_s \cdot y + N_{cells} \cdot M_s \cdot k + M_s \cdot c + s$$

$$\dots \mathrm{Equation\ 1}$$

where $y$ is set to 0 for aperiodic CSI reports to be carried on PUSCH; $y$ is set to 1 for semi-persistent CSI reports to be carried on PUSCH ; $y$ is set to 2 for semi-persistent CSI reports to be carried on PUCCH; $y$ is set to 3 for periodic CSI reports to be carried on PUCCH; $k$ is set to 0 for CSI reports carrying layer 1 (L1)-RSRP or L1-signal to interference plus noise ratio (SINR); $k$ is set to 1 for CSI reports not carrying L1-RSRP or L1-SINR; $c$ is the serving cell index; $N_{cells}$ is the value of the higher layer parameter *maxNrofServingCells*; s is the *reportConfigID;* and $M_s$ is the value of the higher layer parameter *maxNrofCSI-ReportConfigurations.*

A first CSI report is said to have priority over a second CSI report if the associated $\mathrm{Pri}_{iCSI}$ ($y$, $k$, $c$, $s$) value is lower for the first report than for the second report.

Two CSI reports are said to collide if the time occupancy of the physical channels scheduled to carry the CSI reports overlap in at least one orthogonal frequency-division multiplexing (OFDM) symbol and are transmitted on the same carrier.

When a UE is configured to transmit two colliding CSI reports, if *y* values are different between the two CSI reports, the CSI report with higher Pri$_{iCSI}$ (*y, k, c, s*) value shall not be sent by the UE except for the case when one *y* value is 2 and the other *y* value is 3 (e.g., for CSI reports transmitted on PUSCH). Otherwise, the two CSI reports are multiplexed or either is dropped based on the priority values.

If a semi-persistent CSI report to be carried on PUSCH overlaps in time with a PUSCH data transmission in one or more symbols on the same carrier, and if the earliest symbol of these PUSCH channels starts no earlier than $N_2+d_{2,1}$ symbols after the last symbol of the downlink control information (DCI) scheduling the PUSCH where $d_{2,1}$ is the maximum of the $d_{2,1}$ associated with the PUSCH carrying a semi-persistent CSI report and the PUSCH with a data transmission, the CSI report shall not be transmitted by the UE. Otherwise, if the timeline requirement is not satisfied this is an error case.

If a UE would transmit a first PUSCH that includes semi-persistent CSI reports and a second PUSCH that includes an UL-shared channel (SCH) on the same carrier, and the first PUSCH transmission would overlap in time with the second PUSCH transmission, the UE does not transmit the first PUSCH and transmits the second PUSCH. The UE expects that the first and second PUSCH transmissions satisfy the above timing conditions for PUSCH transmissions that overlap in time when at least one of the first or second PUSCH transmissions is in response to a DCI format detection by the UE.

For an aperiodic CSI report timeline, $Z_{ref}$ should be defined as the minimum gap between the last symbol of the PDCCH triggering the aperiodic CSI report and the first symbol of PUSCH carrying the report. A purpose of this constraint is to ensure enough time for PDCCH detection/decoding for receiving the CSI reporting triggering DCI, channel estimation, and CSI calculation. $Z'_{ref}$ should be defined as the minimum gap between the last symbol carrying an AP-CSI-RS for channel measurement (CM), aperiodic channel state information interference measurement (IM), and AP-CSI-RS for IM associated with the triggered report. This constraint may be needed when an aperiodic CSI report is associated with AP-CSI-RS/AP-CSI-IM. When an aperiodic CSI report is associated with periodic/semi-persistent (P/SP) CSI-RS or CSI-IM, the timeline depends on defining the "reference resource".

If the timeline of $Z_{ref}$ is not satisfied, the UE may ignore the scheduling DCI if no hybrid automatic repeat request-acknowledgement (HARQ-ACK) or transport block is multiplexed on the PUSCH. If the timeline of $Z'_{ref}$ is not satisfied, the UE may ignore the scheduling DCI if the number of triggered reports is one and no HARQ-ACK or transport block is multiplexed on the PUSCH. Otherwise, the UE is not required to update the CSI for the n-th triggered CSI report.

When persistent or semi-persistent CSI-RS / CSI-IM is used for channel/interference measurement, the UE is not expected to measure channel/interference on the CSI-RS / CSI-IM whose last OFDM symbol is received 0 to Z' symbols before transmission time of a first OFDM symbol of aperiodic CSI reporting. Also, CSI-RS shall be on or before the CSI reference resource determined by nCSI$_{ref}$ which is the smallest value greater than or equal to $\left\lfloor Z'/N_{symb}^{slot} \right\rfloor$, such that slot n of nCSI$_{ref}$ corresponds to a valid downlink slot.

In the pursuit of enhancing the efficiency and adaptability of the communication network, particularly within the domain of 5G NR, a solution aimed at refining the CSI-RS reporting mechanism is proposed. This embodiment relies on the concept of the UE being pre-configured with multiple candidate CSI-RS resource mapping configurations for each of its configured CSI-RS resources.

A UE may be RRC pre-configured by gNB with a set of candidate CSI-RS resource mapping configurations for each of its configured CSI-RS resources in CSI-ResourceConfig. The "CSI-RS resource" here is referred by a CSI-RS resource set which is referred by CSI-ResourceConfig which is referred by CSI-ReportConfig in which a UE is required to report RI/PMI/CQI. To have multiple resource mappings per CSI-RS resource at level 4, for example, each candidate CSI-RS resource mapping configuration has an associated index, but a UE does not immediately measure or report on any of them. Alternatively, multiple resource mappings can be at level 2, where each non-zero power (NZP)-CSI-RS-ResourceSet can have a different CSI-RS resource mapping and can be activated by a gNB on demand. For example, a NZP-CSI-RS-ResourceSet may have one CSI-RS resource mapping, and an additional new NZP-CSI-RS-ResourceSet may have another CSI-RS resource mapping. Alternatively, multiple resource mappings can be at level 3, where each CSI-ResourceConfig including multiple resource sets can have a different CSI-RS resource mappings and can be activated by a gNB on demand.

Initially, the UE may autonomously select one or more CSI-RS resource mapping configurations, which may be determined randomly, based on local measurements, or as assigned by the gNB. The UE may measure and report the selected CSI-RS resource mapping configurations alongside UE measurements, which include CRI, RI, PMI, and CQI, over the selected mappings to the gNB. The report of this resource mapping index is a part of the CSI-RS report which is a new RRC message information element (IE). In order to report the selected CSI-RS resource mapping configurations, the reportQuantity IE in CSI-report Config IE can be added by an additional IE named "Selected CSI-RS resource mapping configuration index". Additionally, a UE may start the above process only when an activation command is received by a gNB via DCI or a MAC control element (CE). The DCI can be a group common DCI or UE specific DCI. For UE specific DCI, it can include an additional one bit in the "CSI Request" field of DCI 0_1. The activation/deactivation command can be a 1-bit flag in the DCI or MAC CE. Without activation or with deactivation, the UE may perform the CSI-RS measurement and report.

One embodiment of explicit indication of the selected CSI-RS resource mapping is that a UE is configured with a CSI-RS resource mapping pattern with the largest number of antenna ports. Then, the UE is indicated by the gNB on which subset of the antenna ports to measure in the configured CSI-RS resource. In the CSI feedback framework, for each CSI report setting, the number of CSI-RS antenna ports in the configured CSI-RS resources may be equal to the number of ports in a CSI-RS antenna port configuration provided in the codebook configuration. Hence, it is not possible for the UE to provide CSI feedback for a CSI-RS antenna port configuration with a smaller number of ports than the number of ports in the configured CSI-RS resource. Having an option to enable a CSI report based on a subset of CSI-RS antenna ports in the CSI-RS resource configured in a CSI report setting may improve network flexibility in selecting active spatial elements for the adaptation of spatial elements. In particular, the following configuration parameters can be indicated for each of the CSI-RS patterns in the CSI-Report:

- (N1, N2) for single panel or (Ng, N1, N2) for multi-panel in codebook configuration
- Port subset indication in codebookConfig RRC IE and in NZP-CSI-RS-Resource -> resource mapping RRC IE
- NZP CSI-RS resource(s) for channel measurement that has the same number of CSI-RS antenna ports as the number of CSI-RS antenna ports in the configured CSI-RS antenna port configuration
- First indicate the set of code division multiplexing (CDM) group indexes which are used for a CSI measurement and report. Then, indicate a set of antenna ports within a CDM group which are used for CSI measurement and report
- Rank restriction
- Codebook subset restriction
- Supported codebook types for PMI, e.g., Type I or Type II
- Report quantity
- ReportFreqConfiguration

Additionally, a UE may measure the quality of an existing link. For example, the UE can measure the RSRP and/or reference signal received quality (RSRQ) and/or SINR of a subset of the synchronization signal block (SSB) signals or a subset of configured Type I or Type II port CSI-RS signals within the NZP-CSI-RS-ResourceSet of the CSI-reportConfig with reportQuantity set to obtain "cri-RSRP" or "ssb-Index-RSRP", or the RSSI over a predefined measurement time window. There can be different ways to determine the subset of SSB signals or CSI-RS signals for an RSRP measurement. For example, a gNB may explicitly indicate this subset to a UE via an RRC configuration, and there can be one-to-one mapping between a CSI-RS or SSB used for RSRP/RSRQ/SINR evaluation and a CSI-RS in each CSI-ReportConfig for RI/PMI/CQI reporting. In this way, the UE will measure the corresponding CSI-RS or SSB signal for evaluating RSRP/RSRQ/SINR which is mapped to a CSI-RS signal used for RI/CQI/PMI reporting. Alternatively, a UE may implicitly utilize source quantized channel quality information (QCL)-RS of CSI-RS in each report config for RI/PMI/CQI reporting as the one for evaluation of RSRP/RSRQ/SINR. In this case, a UE may expect that there is only one source QCL-RS in each CSI-RS resource set used for RI/PMI/CQI reporting. Or, if there are multiple sources QCL-RS in each CSI-RS resource set (e.g., in the multi-transmission and reception points (mTRP) scenario), a UE will evaluate the RSRP/RSRQ/SINR of the multiple source RSs for each of the possible mTRP transmission hypothesizes. For a CSI-RSRP determination, CSI-RS transmitted on antenna port 3000 shall be used. If CSI-RSRP is used for L1-RSRP, CSI reference signals transmitted on antenna ports 3000, 3001 can be used for a CSI-RSRP determination. The received signal strength indicator (RSSI) comprises the linear average of the total received power (in Watts) observed in configured OFDM symbols and in the configured measurement bandwidth over N number of resource blocks corresponding to a measurement bandwidth with the center frequency of configured absolute radio frequency channel number (ARFCN), by the UE from all sources, including co-channel serving and non-serving cells, adjacent channel interference, and thermal noise.

Upon receiving a CSI report of all serving UEs, a gNB may decide to adapt or reconfigure the antenna ports, and possibly activate/re-configure each UE with new CSI-RS resource mapping configurations.

An enhanced CSI-ReportConfig element for multi-CSI reporting will now be described.

To ensure efficient utilization of network resources and to enhance the adaptability of a UE in dynamic network conditions, the UE should support the capability to measure CSI based on multiple spatial adaptation patterns. These measurements can be carried out on one or several NZP-CSI-RS resources.

The UE can be pre-configured with a range of spatial pattern hypotheses. The activation of aperiodic CSI reports for these patterns may be initiated through the "CSI request" field found in DCI formats 0_1 or 0_2. These spatial pattern hypotheses can be embedded within RRC configurations, specifically within the CSI-AperiodicTriggerState IE or other related IEs. This configuration framework can be expanded to include an optional list of spatial adaptation patterns.

For instance, in a particular CSI reporting scenario, the UE could be set up with different trigger states corresponding to various spatial patterns, such as spatial pattern 1 with 32 antenna ports, spatial pattern 2 with 16 antenna ports, and spatial pattern 3 with 8 antenna ports. This setup could apply to one or multiple CSI-RS resources, tailored for Type I spatial domain (SD) adaptation.

Upon receiving a trigger via DCI, for example, DCI 0_1, and if a list of hypotheses is present, the UE would recognize that it must temporarily set aside the originally configured spatial pattern for the CSI-RS. Instead, the UE would carry out measurements and report the CSI in accordance with each of the configured spatial patterns.

Additionally, for Type II SD adaptation, a separate trigger state can be pre-configured. This would involve the same CSI-RS resource but with different transmission power values for the CSI-RS, which can be indicated by varying the powerControlOffsetSS values. This enables precise control over the power levels used for CSI-RS, thus allowing the UE to provide more accurate CSI feedback under different transmission power conditions.

To enhance network efficiency and to support advanced functionalities, modifications to the CSI request field in the DCI have been introduced. These modifications enable a more detailed approach to requesting CSI reports from UE, accommodating both basic and new enhanced states (NES).

In a basic configuration, the CSI Request field utilizes N bits, allowing for up to $2^{N-1}$ distinct states (with N being as high as 6 in some systems). This configuration supports a maximum of $2^{N-1}$ states, although not all these states are necessarily defined or utilized. The RRC signaling continues to define these states, maintaining the maximum $2^{N-1}$ configurations. However, among these, certain states are designated as basic, while a specific subset of N states is allocated for defining NES-specific states. The activation of either a basic or an NES state is determined by the specific state indicated in the DCI codepoint. For instance, state 1 could be designated as an NES state, with states 2 through 4 identified as basic states. This differentiation ensures that the UE can accurately respond with the appropriate type of CSI report based on the state triggered.

Another approach involves using the N bits as a bitmap to denote which states need reporting. This method allows for the reporting of up to N states, enhancing flexibility in communication between the UE and the network. Determining whether the reporting should follow the basic or the NES format can be achieved through RRC signaling to specify occasions when the UE is expected to report in the basic format and when it should utilize the NES reporting format. This could involve a bitmap that outlines the reporting format on a per-slot basis. Also, determining whether the reporting should follow the basic or the NES format can be indicated through a single bit within the DCI to signal whether the basic or NES reporting format should be used. This could be implemented as a new bit field within the DCI or by repurposing one bit of the CSI request field. Using one bit for this purpose would effectively limit the reporting to N-1 states.

The UE's ability to support advanced multi-CSI reporting for various spatial and power adaptations can be communicated to the gNB through RRC signaling as a part of the UE's capability reporting.

The quantity of spatial pattern hypotheses that a UE is capable of configuring and reporting is based upon its specific capabilities. These include factors such as the number of simultaneous reports it can manage per component carrier (CC), denoted as simultaneousCSI-ReportsPerCC ranging from 1 to 8, as well as the aggregate number across all CCs, which is indicated by simultaneousCSI-ReportsAllCC and can vary from 5 to 32. Additionally, N CSI reports suggests that N CSI processing units (CPUs) could be utilized from the UE's total budget for concurrent CSI computations.

"CPU" refers to the CSI processing unit, a term distinct from the conventional "central processing unit" found in computers. The CPU may be an entity within a UE that is dedicated to processing CSI. The CSI includes data about a wireless communication channel's condition between the UE and the network's base station, which may be used for optimizing communication efficiency, signal quality, and overall network performance.

Determining a CPU may involve various computations and routines to evaluate, interpret, and format CSI data for reporting back to the network. This data can inform decisions on aspects like beamforming, power control, and scheduling, enabling the network to adapt to current channel conditions dynamically.

When considering the aperiodic CSI report, multiple reports may be triggered aperiodically on a single PUSCH. However, for periodic CSI reports, the content of the CSI report may require augmentation to be compatible with the channel capacity of the PUCCH, potentially through various compression techniques. Similar to the periodic CSI report, for semi-persistent CSI reports, the amalgamation of multiple reports, triggered aperiodically, on a single PUSCH may be used.

A hypothesis in this context aligns with a sub-configuration within a CSI report configuration. A set of indices (e.g., pointers to the various patterns or hypotheses) could be integrated within the RRC CSI-AperiodicTriggerState or other related IEs. Upon the initiation of a trigger state by a DCI, for example, DCI 0_1, and with the presence of these pointers, the UE would recognize the requirement to measure and report CSI in accordance with each sub-configuration indicated by the trigger state.

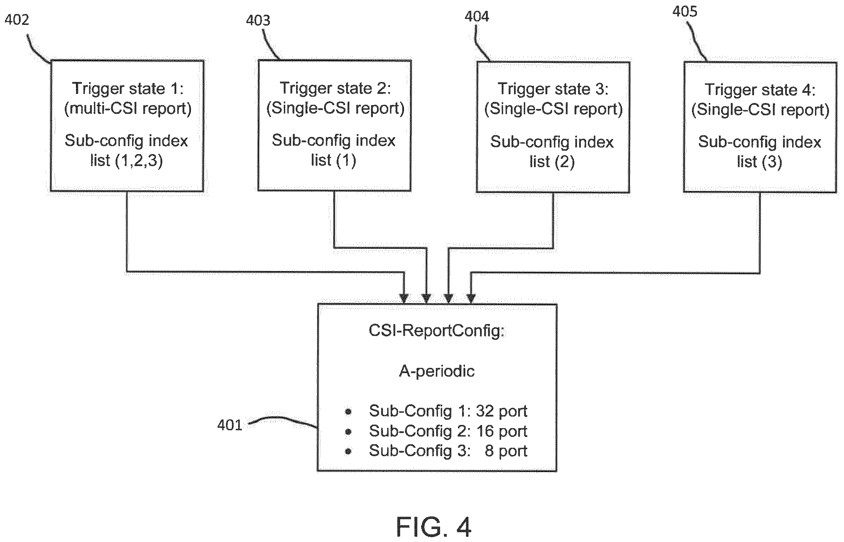

FIG. 4 is a block diagram illustrating how a UE can be set up to respond to various trigger states for CSI reporting, according to an embodiment.

Referring to FIG. 4, the diagram includes a CSI-ReportConfig: A-periodic (asymmetric periodic) block 401, which outlines three sub-configurations that the UE may be tasked to measure and report. These are characterized by the number of antenna ports involved, with Sub-Config 1 (corresponding to sub-configuration index 1) utilizing 32 ports, Sub-Config 2 (corresponding to sub-configuration index 2) using 16 ports, and Sub-Config 3 (corresponding to sub-configuration index 3) comprising 8 ports.

There are four trigger states shown in FIG. 4, each indicating a different reporting requirement. Trigger state 1 402 corresponds to a multi-CSI report and is connected to sub-configuration indices 1, 2, and 3. Trigger state 2 403 pertains to a single-CSI report linked to sub-configuration index 1. Similarly, trigger state 3 404 is associated with sub-configuration index 2, while trigger state 4 405 is linked to sub-configuration index 3.

For the CSI-ReportConfig for Type I spatial adaptation, which involves dynamic antenna port adaptation, each sub-configuration encompasses specific parameters related to the spatial adaptation pattern. These parameters are designed to facilitate precise and dynamic adaptation of the antenna ports for optimal signal reception and transmission.

For a single panel setup, the parameters include a pair, (N1, N2), which are defined within the codebook configuration. In cases of a multi-panel configuration, an additional parameter, Ng, is included alongside N1 and N2. The purpose of these parameters is to detail the antenna port configuration and usage, where N1 and N2 typically represent the number of columns and rows in the antenna array, and Ng represents the number of groups or panels involved.

The codebook configuration also provides a port subset indication, which is referenced within the RRC IE and the NZP-CSI-RS resource's resource mapping RRC IE. This indication allows for the selection of specific subsets of antenna ports for channel measurement, rather than utilizing all available ports.

The NZP CSI-RS resources are characterized not only by the frequency and time domain but also by the code domain, ensuring that the channel measurements align with the actual number of CSI-RS antenna ports used in the configured CSI-RS antenna port configuration.

Another method to indicate the CSI measurements and reports is to first identify the set of CDM group indexes. Subsequently, the specific set of antenna ports within a CDM group intended for CSI measurement and reporting is indicated.

The sub-configuration may be further defined by rank restrictions, which limit the number of layers for MIMO transmission, and codebook subset restrictions, which specify the subset of precoding matrices that can be used. The sub-configuration may also specify the supported codebook types for the PMI, such as Type-I or Type-II, which are selected based on the UE's capabilities and the network requirements.

Additionally, the report quantity and report frequency configuration are parameters that detail the specifics of the CSI that should be reported, including the frequency of such reports.

For Type II spatial adaptation, which pertains to spatial antenna element adaptation, the UE reports CSI for each CSI-RS resource within a resource set associated with the CSI-ReportConfig. For Type I spatial adaptation, each CSI-RS resource aligns with one Type I SD pattern. However, to notify the UE that multiple reports are necessary for each CSI-RS resource in the set, an additional RRC parameter, reportQuantity _2, could be introduced as Multi-Resources-RI-PMI-CQI.

This new reporting quantity differs from CRI-RI-PMI-CQI, where the UE reports only one CSI corresponding to the "preferred" CSI-RS resource. In scenarios necessitating spatial element adaptation with multiple CSI reports, there's no requirement for the UE to report CRI, as it will provide a distinct CSI for each resource in the set.

To further extend the capabilities for both Type I and Type II spatial adaptations, additional RRC parameters like "Multi-Resources-RI-CQI", "Multi-Resources-RI-LI-PMI-CQI", "Multi-Resources-RI-i1-CQI", "Multi-Resources-RI-i1", and "Multi-Resources-RSRP" are proposed. Each correlate to the existing reportQuantity parameters and serves to enhance the UE's reporting to accommodate the network's spatial adaptation needs. The adjustments to these messages and IEs are in line with the multi-resource approach outlined for RI-PMI-CQI.

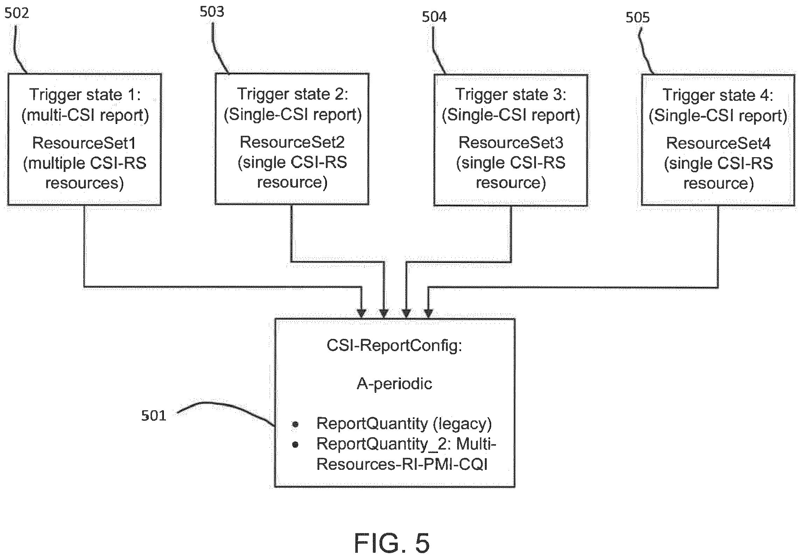

FIG. 5 is a block diagram illustrating how a UE can be set up to respond to various trigger states for CSI reporting, according to an embodiment.

Referring to FIG. 5, the CSI-ReportConfig: A-periodic (asymmetric periodic) block 501 illustrates the overall configuration for aperiodic CSI reporting. This box details two types of reporting quantities: the standard legacy report quantity and an enhanced report quantity labeled "ReportQuantity_2: Multi-Resources-RI-PMI-CQI", which is a more complex reporting mechanism that can handle multiple CSI resources at once, providing comprehensive feedback on the RI, PMI, and CQI.

Four trigger states are illustrated, each depicting a distinct reporting instruction set. Trigger state 1 502 is linked to ResourceSet1, indicating that the UE, when prompted by this state, should compile a CSI report that encompasses multiple CSI-RS resources. Trigger state 2 503 is associated with ResourceSet2. Similarly, trigger state 3 504 is associated with ResourceSet3. Also, trigger state 4 505 is associated with ResourceSet4. The UE, upon receiving the appropriate trigger, would then execute measurements and report CSI as per the indicated sub-configurations, ensuring a dynamic and responsive adaptation to the network's spatial and power requirements.

In the context of both spatial domain adaptation and power domain adaptation within a wireless communication system, the processing load, often quantified as CPU occupancy ($O_{CPU}$), should be considered for CSI reporting. For the cases where there is no payload reduction in the CSI report, which includes CSI reports corresponding to N indicated sub-configurations from L sub-configurations, the computational load on the UE can be calculated as follows.

The CPU occupancy, or processing load, is determined by summing the total number of CSI-RS resources that correspond to each indicated sub-configuration within the CSI-RS resource set designated for channel measurement. Mathematically, this is represented by Equation 2, below.

$$O_{CPU} = \sum_{i=1}^{[N\ or\ L]} K_s^i$$

$$\ldots Equation\ 2$$

where $K_s^i$ denotes the count of CSI-RS resources associated with the i-th sub-configuration.

For A-CSI RS, the summation is taken over N, which is the number of sub-configurations indicated for reporting. This approach aligns with the CSI processing criteria for NES as detailed in Clause 5.2.1.6 of the 3GPP technical specification (TS) 38.214, which states that $O_{CPU}$ equals the product $K_s$, which represents the number of CSI-RS resources within the channel measurement set. However, with the introduction of L sub-configurations and A-CSI-RS, the formula adapts to consider the multiple NZP CSI-RS resources referenced by each of the N sub-configurations for CSI measurement. The updated formula for such aperiodic CSI reporting is provided by Equation 3, below.

$$O_{CPU} = \sum_{n=1}^{N} K_{s,n}$$

$$\ldots Equation\ 3$$

where $K_{s,n}$ represents the total count of NZP CSI-RS resources referred to by the nth sub-configuration.

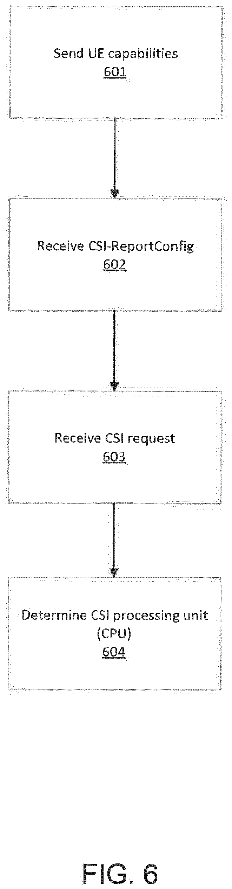

FIG. 6 is a flowchart illustrating a procedure for multi-CSI reporting, according to an embodiment.

Any of the components, blocks, or elements, or a combination thereof, illustrated in FIGS. 1-5 and 7-11 can be used to perform one or more of the operations (steps) of the flow chart. Further, operations shown in FIG. 6 are examples operations, and may involve various additional steps not explicitly covered. Also, the temporal order of the operations in FIG. 6 may vary, and some implementations may omit one or more of the operations. Furthermore, one or more of the operations of FIG. 6 may be performed in series or in parallel.

Referring to FIG. 6, in step 601, the UE sends UE capabilities for NES multi-CSI reporting. Here, the UE sends information about its capabilities to the network. These capabilities indicate whether the UE can support enhanced procedures for reporting multiple CSI metrics simultaneously (NES multi-CSI reporting).

In step 602, the UE receives CSI-ReportConfig. After the UE's capabilities are sent, the UE receives a CSI-ReportConfig from the network. This configuration includes the parameters and instructions on how the UE should report CSI, detailing the specific conditions and metrics that need to be reported. This may include a plurality of configurations (e.g., sub-configurations) for CSI-reporting.

In step 603, the UE receives a CSI request (an aperiodic CSI request) for NES for a set of CSI configurations (e.g., a CPU). This request is for reporting NES and it pertains to a predefined set of CSI configurations. The CSI request triggers the UE to prepare the necessary CSI information based on the current state of the channel as per the NES criteria.

In step 604, the UE determines (or calculates) a CPU. Here, the UE may determine the content of the multi-CSI report. This can include selecting the appropriate data and measurements that match the requested CSI configurations and assembling them into a coherent report. The CPU may be determined based on CSI configurations for a plurality of spatial adaptation patterns based on the CSI reporting configuration information (CSI-ReportConfig). To determine the CPU, a summation operation (also referred to as a compilation operation) of a number of CSI-RS resources corresponding to each spatial adaption pattern for a plurality of sub-configurations may be performed. Furthermore, the UE may subsequently transmit and/or receive signals based on the determined CPU.

According to an embodiment, a scenario where UE can report on multiple CSI instances within a single reporting occasion is provided. In this case, the UE may have a set of L sub-configurations for CSI reporting, provided by higher-layer signaling.

For aperiodic CSI and semi periodic CSI reporting, the system requires the capability to dynamically select a subset of these configurations (N out of L) for reporting. This allows the network to remain flexible without necessitating RRC reconfiguration for all L sub-configurations. For example, a UE may be instructed via a PDCCH delivering a DCI message or via a PDSCH delivering a MAC CE, which includes a CSI report configuration ID. The existing formats for DCI and MAC-CE can be expanded to convey the indices of the sub-configurations to be reported.

In particular, where there is no Layer 1/Layer 2 (L1/L2) signaling available for updating periodic CSI reporting, the system can support scenarios where N equals L. For aperiodic reporting, additional configurations or parameters can be included in CSI-AssociatedReportConfigInfo to reference the selected sub-configurations.

For semi periodic CSI triggered by DCI, the enhancements made to aperiodic CSI reporting can be similarly applied. When semi periodic CSI is triggered by a MAC-CE, the MAC-CE can indicate the relevant parameters that refer to the sub-configurations.

The gNB pre-configures each UE with potential subsets of N out of L sub-configurations as different CSI reporting trigger states. The specific trigger state can then be dynamically indicated by the gNB as necessary via DCI or MAC CE. The modification of the CSI request field in DCI or MAC CE facilitates this dynamic indication.

For example, for CSI-AperiodicTriggerState 1, the associated report configuration list might include identifications (IDs) such as AssociatedReportConfigID1 and AssociatedReportConfigID2, with an associated subset of configurations such as {1-2-3, 2-3}.

Similarly, for CSI-AperiodicTriggerState 2, the configuration list could again feature the same report configuration IDs with a different associated subset of configurations such as {1-2, 1-2-3}.

These trigger states enable the network to instruct the UE on which specific sub-configurations to report, providing efficient feedback based on the network's current needs.

According to an embodiment, reporting distinct spatial patterns across various report timing instances may be used to provide an enhanced CSI report timeline for reporting in multiple occasions. This method may necessitate the introduction of new RRC signaling. This signaling is responsible for pre-configuring the timelines for multiple CSI reports that correspond to a variety of spatial patterns or multiple transmission power (Tx power) hypotheses.

For instance, consider an aperiodic CSI report scenario where a UE is tasked with reporting three different spatial adaptation patterns by measuring the AP-CSI-RS resources. To effectively manage this reporting, basic timeline parameters, $Z_{ref}$ and $Z'_{ref}$, may be further enhanced. The enhancement involves introducing differentiated parameters: $Z_{ref\_1}$, $Z_{ref\_2}$, and $Z_{ref\_3}$, along with $Z'_{ref\_1}$, $Z'_{ref\_2}$, and $Z'_{ref\_3}$. Each of these refined parameters corresponds to separate reporting instances for the three distinct spatial adaptation patterns.

This allocation of individual reference timing parameters allows for a more organized and segmented reporting process. Each $Z_{ref}$ and $Z'_{ref}$ pair would define the timing relationship between the triggering event, such as the reception of DCI signaling a CSI report, and the actual transmission of the CSI report via the PUSCH. The $Z_{ref}$ parameters would typically represent the minimum gap between the DCI trigger and the associated AP-CSI-RS/CSI-IM resource. In contrast, the $Z'_{ref}$ parameters would define the minimum gap before the transmission of the PUSCH carrying the aperiodic CSI report.

The use of separate parameters for each spatial pattern enables the network to instruct the UE on the precise timing for reporting on different antenna configurations or power settings. Such granularity in reporting can significantly enhance the ability of the network to respond to dynamic environmental changes and UE mobility.

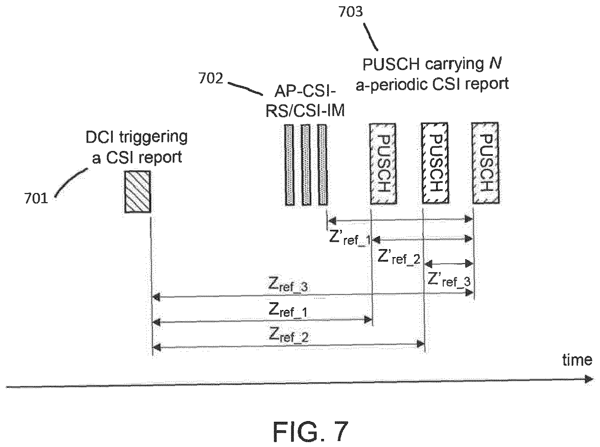

FIG. 7 illustrates an extended timeline of the enhanced CSI reporting mechanism for measuring AP-CSI-RS resources, according to an embodiment.

FIG. 7 graphically conveys a structured and timed approach for the UE to successfully complete multiple CSI reports, ensuring each report is transmitted within the appropriate time window following the network's initial DCI trigger.

Referring to FIG. 7, a timeline is shown in which a DCI message 701 that triggers the UE to start the CSI reporting procedure is provided at a time instance. Following this trigger, the UE engages in measuring the channel based on AP-CSI-RS or CSI-IM 702, as denoted by a series of vertical bars. After completing the measurements, the UE transmits the accumulated CSI data back to the network (or directly to the gNB) over the PUSCH 703, represented by three distinct blocks in the timeline, each block corresponding to an aperiodic CSI report.

The timeline is marked with specific timing parameters, $Z_{ref\_1}$, $Z_{ref\_2}$, and $Z_{ref\_3}$, which establish the minimum intervals between the DCI trigger and the corresponding AP-CSI-RS/CSI-IM resources. These intervals are for ensuring that the UE has adequate time to measure and process the CSI data accurately. Similarly, the lines labeled "$Z'_{ref\_1}$", "$Z'_{ref\_2}$", and "$Z'_{ref\_3}$" indicate the minimum gaps that must elapse between the AP-CSI-RS/CSI-IM measurements and the subsequent PUSCH transmissions carrying the CSI reports. Each of these timing parameters is linked to a unique aspect of the CSI report, such as a distinct spatial adaptation pattern or transmission power hypothesis, which the UE is set to report on.

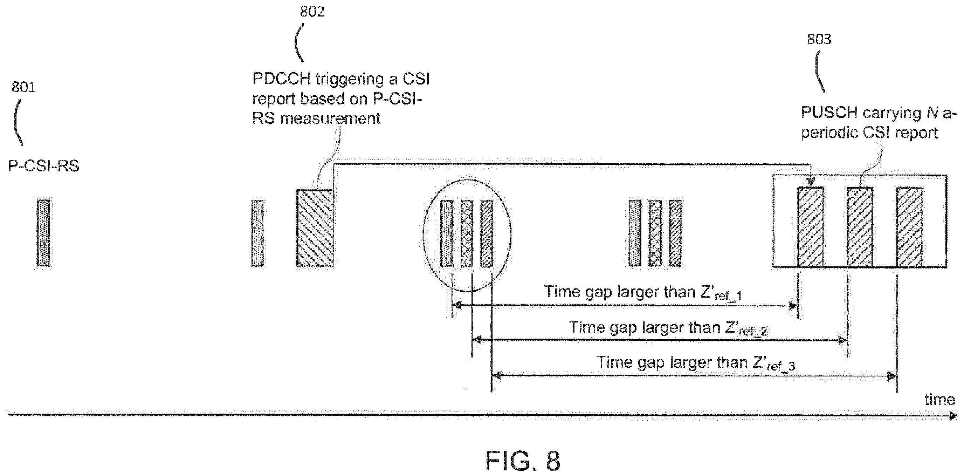

FIG. 8 illustrates an extended timeline of the enhanced CSI reporting mechanism for measuring P-CSI-RS resources, according to an embodiment.

FIG. 8 illustrates how the process of measuring and reporting multiple spatial adaptation patterns is structured over time, ensuring that each pattern's report is accurately sequenced for transmission based on the time gaps specified by the $Z'_{ref}$ parameters.

Referring to FIG. 8, the timeline commences with a set of P-CSI-RS signals 801, which the UE uses to measure the channel state. Following this, PDCCH 802 is used to trigger a CSI report based on these P-CSI-RS measurements.

The timeline then shows an arrow leading from the PDCCH trigger to a series of PUSCH transmissions 803. These PUSCH blocks carry the actual N aperiodic CSI reports, which are the result of the measurements initiated by the PDCCH. The time intervals between the PDCCH trigger and the corresponding PUSCH transmissions are denoted by arrows labeled with "Time gap larger than $Z'_{ref\_1}$," "Time gap larger than $Z'_{ref\_2}$," and "Time gap larger than $Z'_{ref\_3}$." Each of these time gaps corresponds to one of the three spatial adaptation patterns that the UE is reporting on. The use of different $Z'_{ref}$ parameters allows for the timing of each CSI report to be individually tailored to the specific requirements of each spatial pattern.

Accordingly, when DCI is used to trigger multiple CSI reports, each of which corresponds to a sub-configuration of a CSI report configuration in a different time occasion, the value of Z and Z' may be provided based on Equation 4 and Equation 5 as follows:

$$Z = \max_{m=0,...,M-1}(Z(m))$$

$$\dots \text{Equation 4}$$

$$Z' = \max_{m=0,...,M-1}(Z'(m))$$

$$\dots \text{Equation 5}$$

where M is the number of updated CSI report(s) determined based on the available CPUs, and $(Z(m), Z'(m))$ corresponds to the $m$-th updated CSI report.

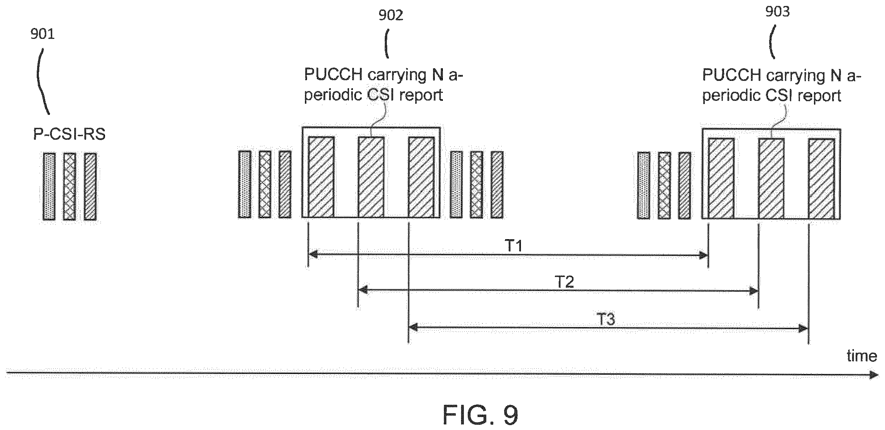

FIG. 9 illustrates an extended timeline of the enhanced CSI reporting mechanism for measuring P-CSI-RS resources, according to an embodiment.

FIG. 9 illustrates how the process of measuring and reporting multiple spatial adaptation patterns is structured over time, ensuring that each pattern's report is accurately sequenced for transmission based on periodicities of reporting three different spatial patterns, defined as T1, T2, and T3.

Referring to FIG. 9, a sequence of P-CSI-RS signals 901 is shown at a first time instance, which are utilized by the UE to perform channel measurements tailored to each spatial adaptation pattern.

Moving along the timeline, there are two instances, 902 and 903, where the PUCCH is used to carry the aperiodic CSI reports back to the network (or the gNB). The first and second instances, 902 and 903, respectively, are each represented by a series of blocks grouped together, indicating the transmission of the first aperiodic CSI report covering the first spatial pattern. This report is associated with the periodicity T1. The second aperiodic CSI report is associated with the periodicity of T2, and the third aperiodic CSI report is associated with the periodicity of T3.

Each periodicity, T1, T2, and T3, is defined to manage the timing for when the UE reports the CSI associated with each spatial pattern. By setting different periodicities, the network can schedule the reception of detailed CSI reports for each spatial pattern without overlap.

Accordingly, as shown above with respect to FIGS. 7-9, for periodic and/or aperiodic CSI reporting, the gNB has the flexibility to dynamically adjust the CSI-RS resource mapping pattern that the UE is to measure and report. This dynamic alteration can be communicated to the UE through UE-specific or group common DCI or MAC CEs. The various sets of CSI-RS resource mapping patterns or spatial adaptation patterns are typically pre-configured in the UE by RRC signaling.

The reporting timeline for semi-persistent CSI mirrors that of aperiodic CSI reporting. For the first instances of CSI reports corresponding to different sub-configurations, the UE should adhere to a timeline defined by a sequence of $Z'_{ref}$ parameters (e.g., $Z'_{ref\_1}$, $Z'_{ref\_2}$, and $Z'_{ref\_3}$) to report on multiple separate spatial adaptation patterns. Additionally, the reports for these spatial patterns should follow defined periodicities denoted by T1, T2, and T3, each corresponding to a different spatial pattern.

To facilitate the execution of multiple CSI reports at different times, the UE should be pre-configured with distinct values for $Z_{ref}$ and $Z'_{ref}$ that apply to aperiodic CSI or semi-persistent CSI reporting, as well as with different periodicity values for periodic CSI, which may correspond to each spatial adaptation pattern. This configuration could be accomplished through new RRC signaling parameters. These parameters may either constitute a separate new RRC signaling message or be included within the same RRC message as the CSI-Report-Config.

Accordingly, when using A-CSI-RS for channel measurement, the process is governed by specific CSI processing related parameters. These parameters may be used to determine the computational load on the UE and to ensure the network's efficient allocation of resources. For example, one approach is to calculate CPU occupancy as a straightforward multiplication of the number of CSI-RS resources within a set designated for channel measurement. However, for aperiodic reporting that involves multiple sub-configurations, the CPU occupancy calculation becomes a summation of the individual counts of NZP CSI-RS resources as referred to by each sub-configuration within the report.

Simultaneous active CSI-RS resource counting takes into account the multiple references to a single CSI-RS resource across various CSI reporting settings. If a resource is referenced multiple times, it is counted accordingly. This principle is adapted for aperiodic reporting with L sub-configurations, extending the count to each occasion a resource is referenced by the indicated sub-configurations. This ensures a comprehensive tally of the active CSI-RS ports, particularly when employing revised configurations for channel measurement.

When CSI reporting is carried out on the PUSCH with A-CSI-RS or SP-CSI-RS, the UE measures only those CSI-RS resources that occur well before the PUSCH transmission. This requirement is dictated by a predefined number of symbols, ensuring that the UE has ample time for accurate CSI measurements. If the triggering DCI doesn't precede a valid CSI-RS resource, the UE is expected to perform measurements for all CSI-RS resources prior to the transmission. The counting for aperiodic CSI-RS may count each resource as many times as it is referred to by the sub-configurations within the CSI report configuration.

According to an embodiment, CSI report overhead may be reduced for reporting a single occasion.

The process of transmitting multiple CSI reports in a single instance can be optimized to reduce overhead. Traditionally, a single CSI report might include various parameters such as PMI, CQI, and RI. However, when reporting multiple CSIs, some of the content, such as CRI or PMI, may be the same or similar across reports for different spatial adaptation patterns. This similarity allows for a consolidation of the reporting process.

For instance, in Type I SD adaptation, where the number of antenna ports changes, the CRI remains constant across different CSIs. Consequently, it is efficient to report a single CRI for all such CSIs. Similarly, in power domain (PD) adaptation scenarios, if CRI, RI, and PMI are unchanged across different power levels, it is prudent to report each of these quantities only once for all CSIs concerned.

Another method for reducing overhead involves joint coding. In Type I SD scenarios, the RI might decrease as the number of CSI-RS ports is reduced. For example, an RI of 4 derived from an 8-port CSI-RS measurement might be reduced to 2 or 1 when measured with 4-port and 2-port CSI-RS, respectively. If the CSIs are reported in descending order of port numbers, the corresponding RIs may also decrease accordingly. In such cases, the RIs can be jointly coded, which saves on reporting payloads by using a predefined set of bits to represent the range of RIs associated with descending numbers of antenna ports.

The reporting of value differences across the same quantity of different CSIs is also a viable option for overhead reduction. For PD adaptation, where CRI, RI, and PMI are consistent, reporting the CQI difference between reduced-power CSIs and the highest-power-level CSI can effectively reduce feedback payloads. This approach mirrors the concept of CQI subband reporting, where the CSI CQI offset is calculated by subtracting the Reference CQI (Ref CQI) from the CSI CQI. The Ref CQI is typically the CQI associated with the highest power level.

Differential CQI values may be mapped according to Table 1 and Equation 6, as shown below.

Table 1

| Differential CSI CQI Value | CSI CQI Offset |
|---|---|
| 0 | 0 |
| 1 | 1 |
| 2 | >= 2 |
| 3 | <= -1 |

$$Differential\ CSI\ CQI = CSI\ CQI\ Offset = CSI\ CQI - Ref\ CQI$$

$$\dots Equation\ 6$$

where *Ref CQI* is the CQI of the CSI with the highest power level.

Table 2, below, depicts situations in which the reporting contents of CSI quantities are the same or different across CSIs with spatial or power adaptation. In the table, the power adaptation is denoted as PD, whereas Type 1 and Type 2 spatial adaptations are denoted as Type1 SD1 and Type2 SD. For Type 1 SD, the CRI is the same for CSIs with different port numbers, and reporting one CRI across these CSIs is reasonable. PD, CRI, RI, and PMI may be the same for CSIs with different power levels, thus only reporting one CRI, RI, PMI across these CSIs is possible.

Table 2

| Spatial and power adaptation Types | | Same or different across CSIs for type1,2 SD or PD | | | |
|---|---|---|---|---|---|
| | | CRI | RI | PMI | CQI |
| Type 1 SD | Port Number changes | Same | Different | Different | Different |
| Type 2 SD | Beam direction and beamforming gain changing | Different | Same/ Different | Different | Different |
| PD | Power adaptation | Same | Same | Same | Different |

For reporting other CSI quantities such as L1-RSRP or RI for a multi-CSI report, similar approaches described for CQI reporting can be considered. In particular, the L1-RSRP difference between the CSI with one spatial adaptation pattern and CSI with a predefined spatial adaptation pattern could be reported to reduce the feedback payloads. The differential CSI L1-RSRP may be given based on Equation 7, below

$$Differential\ CSI\ L1\text{-}RSRP = CSI\ L1\text{-}RSRP\ Offset = CSI\ L1\text{-}RSRP - Ref\ L1\text{-}RSRP$$

$$\ldots Equation\ 7$$

where *Ref L1-RSRP* is the L1-RSRP of the CSI with a predefined spatial adaptation pattern or PDSCH power offset value.

If the UE reports multiple PMI reports of the same size, for example, for different *powerControlOffset* or *powerControlOffsetSS* values but for the same CSI-RS resources, a PMI feedback for the second CSI report can be based on a basis configuration set for which the UE reports for the first CSI report and the UE reports amplitude/phase coefficients for the second CSI report (without reporting amplitude/phase coefficients for the first CSI report).

In another example, the PMI for the second CSI report not only reuses the basis set from the first CSI report but also the amplitude/phase coefficients are reported relative to the coefficients for the first CSI report, i.e., using differential values.

In another example, the UE may choose a subset of CSIs to share PMI parameters based on spatial similarity and, for the rest of the CSIs, PMI parameters are reported in a standalone manner. In this case, the chosen subset of CSIs sharing PMI parameters should be informed to the gNB. If the UE reports multiple PMI reports of similar sizes from the same CSI-RS resources, PMI feedback size reduction is still possible with some restrictions related to the codebook parameter (e.g., $N_1$, $N_2$ are imposed). For example, assuming that Type I codebook is used for PMI feedback, the first PMI report and the second PMI report with ($N_1$, $N_2$) may be (8, 2) and (4, 2), respectively. Based on the similarity of PMI, the first PMI report and the second PMI report can be combined. The same PMI parameters based on the hypothesis of the second PMI report can be reported for both of them. Although the granularity of horizontal dimension of second PMI is sparser, it is still useful to represent the spatial direction.

In another example, because the precoding matrix that is provided as part of the CSI feedback is essentially coefficients that coherently combine signals at the receiver to maximize reception power, similar (if not the same) precoding matrix structures and coefficients may be used for various subsets of CSI-RS port cases. In particular, the precoding matrix from one CSI feedback can be leveraged for another CSI feedback that corresponds to a different subset of CSI-RS port(s). The PMIs of other smaller CSI-RS ports may be derived by the gNB from a sub-matrix of the precoding matrix of the largest CSI-RS ports reported by the UE. Thus, different CSI feedback with different numbers of antenna ports may report only one common PMI report corresponding to the CSI with the largest number of CSI-RS ports. In particular, for Type I SD adaptation, the UE can report a PMI of a largest number of rows. Then, the rows of the precoding matrix of smaller ports numbers are selected from the precoding matrix of the largest number of rows. In the precoding matrix, each row may correspond to one port. Thus, the selected rows depend on the subsets of ports indicated by the gNB. For example, the gNB can send a port subset indication, the UE can measure the PMI of the largest ports number, while each row of the precoding matrix having smaller ports numbers are extracted from the indicated rows (via a port subset indication) of the precoding matrix of the largest ports number. In addition, when rank of the channel is reduced due to shut down the antenna port, the column(s) of the precoding matrix of a smaller rank may be selected from the columns of the precoding matrix of a largest rank.

In another example, based on the condition/threshold (e.g., a CQI index) configured by the gNB, both wideband CSI and sub-band CSI information may be included in the CSI report for the best performance (e.g., highest CQI) spatial or power adaptation patterns, and only wideband CSI information may be included in the CSI report for other adaptation patterns.

According to an embodiment, priority and dropping of a CSI report may be applied.

Optimization of the reporting process through composition and prioritization rules, enhancing the CSI reporting framework to accommodate the complexities of advanced 5G networks, is described.

A first part of the CSI report, referred to as CSI part 1, typically includes a comprehensive set of information comprising CRI, RI, LI, PMI, and CQI for the first transport block (TB). When the UE is reporting multiple CSI information within a single report, a clear mapping order should be established, either pre-aligned with the gNB or directly indicated by the UE, to clarify which adaptation pattern the CSI information corresponds to.

For instance, when configuring a CSI report for various power offset values within a single CSI-RS resource, the UE might report a combination such as CRI, RI#1, LI#1, PMI#1, and CQI#1 for the first TB followed by RI#2, LI#2, PMI#2, and CQI#2 for the same TB. Alternatively, the UE might compile a sequence that includes the CRI followed by both RI#1 and RI#2, both LI#1 and LI#2, and both PMI#1 and PMI#2, ending with CQI#1 for the first TB and CQI#2 for the same TB.

For CSI part 2, priority levels may be defined to manage the reporting of multiple instances of CSI information corresponding to various spatial or power adaptation patterns. For instance, part 2 sub-band CSI information for a specific spatial or power adaptation pattern might be prioritized over others. If the resource allocation for the CSI report does not include all of the multiple CSI information, the pre-configured rules could dictate that part 2 CSI information of lower priority be omitted.

An example of such prioritization could be ordering the reporting priority of part 2 sub-band CSI in descending order, starting from the spatial pattern with the most antenna ports to the one with the least, or vice versa. In some cases, only CSI information from spatial pattern indexes with even numbers may be reported, with the gNB inferring the omitted patterns. For instance, if there are 32 ports (P1), 16 ports (P2), 8 ports (P3), and 4 ports (P4), the UE might only report CSI for P1 and P3, allowing the gNB to interpolate the CSI for P2 and P4. In the event of a time-domain collision between CSI reports, the UE may transmit only the CSI report with the highest priority adaptation pattern information, and lower priority CSI reports may be dropped.

A priority rule, such as $\text{Pri}_{iCSI}(y,k,c,s)$, may be configured in advance for each spatial or power adaptation pattern according to Equation 8, below.

$$\text{Pri}_{iCSI}(y, k, c, s) = 2 \cdot N_{cells} \cdot M_s \cdot y + N_{cells} \cdot M_s \cdot k + M_s \cdot c + s + X$$

$$\dots \text{Equation 8}$$

where: $y=0$ for aperiodic CSI reports to be carried on PUSCH;

$y = 1$ for SP CSI reports to be carried on PUSCH;
$y = 2$ for SP CSI reports to be carried on PUCCH;
$y = 3$ for periodic CSI reports to be carried on PUCCH;
$k = 0$ for CSI reports carrying L1-RSRP or L1-SINR;
$k = 1$ for CSI reports not carrying L1-RSRP or L1-SINR;
$c$ is the serving cell index;
$N_{cells}$ is the value of the higher layer parameter maxNrofServingCells;
$s$ is the reportConfigID;
$M_s$ is the value of the higher layer parameter maxNrofCSI-ReportConfigurations; and
$X$ is the priority value of the specific spatial adaptation pattern or specific PDSCH power offset.

Accordingly, a rule for associating CSI reports with a priority value is enhanced to include the priority $X$ for different spatial adaptation patterns or PDSCH power offset values. The priority value, $\text{Pri}_{iCSI}(y,k,c,s)$, is formulated to reflect these considerations, where a higher $X$ value is assigned to spatial adaptation patterns with more antenna ports. This priority value $X$ may control the importance of the CSI report within the network, ensuring that the most significant spatial adaptation information is retained during periods of reporting contention.

Accordingly, the solutions described herein introduce an innovative method for optimizing CPU operations within electronic devices by making advancements to CSI reporting. The solutions inherently rely on the structural component of the CPU to enhance overall device performance. This optimization technique significantly reduces power consumption during low-demand periods while ensuring peak performance during high-demand tasks, thereby improving the efficiency and longevity of the electronic device.

In addition, embodiments disclosed herein further encompass advancements in UE through the implementation of adaptive antenna switching realized through CSI reporting. This mechanism is designed to improve the structural interaction between the UE and the wireless network, facilitating optimal signal reception based on a user's geographical location and movement patterns. By structurally integrating this mechanism within the UE's hardware, the solutions disclosed herein substantially enhance the reliability and stability of wireless communications. This improvement directly contributes to the structural components of the UE, offering a practical solution to common connectivity challenges faced by mobile devices in varying network conditions.

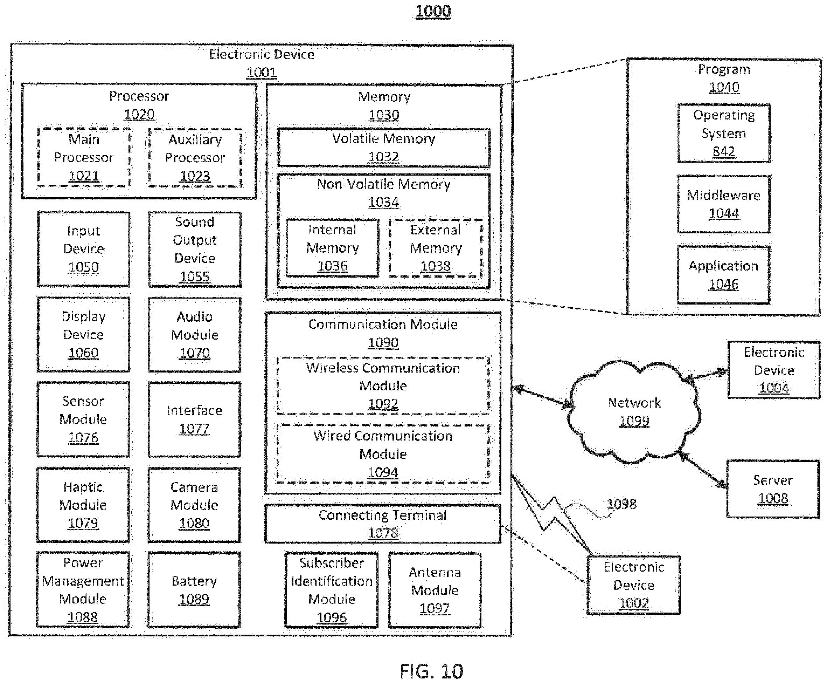

FIG. 10 is a block diagram of an electronic device in a network environment, according to an embodiment.

Referring to FIG. 10, an electronic device 1001 in a network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) card 1096, or an antenna module 1097. In one embodiment, at least one (e.g., the display device 1060 or the camera module 1080) of the components may be omitted from the electronic device 1001, or one or more other components may be added to the electronic device 1001. Some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute software (e.g., a program 1040) to control at least one other component (e.g., a hardware or a software component) of the electronic device 1001 coupled with the processor 1020 and may perform various data processing or computations.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). The auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. Non-volatile memory 1034 may include internal memory 1036 and/or external memory 1038.

The program 1040 may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. The display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. The audio module 1070 may obtain the sound via the input device 1050 or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. The interface 1077 may include, for example, a high- definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. The connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. The haptic module 1079 may include, for example, a motor, a piezoelectric element, or an electrical stimulator.

The camera module 1080 may capture a still image or moving images. The camera module 1080 may include one or more lenses, image sensors, image signal processors, or flashes. The power management module 1088 may manage power supplied to the electronic device 1001. The power management module 1088 may be implemented as at least part of, for example, a power management integrated circuit (PMIC).

The battery 1089 may supply power to at least one component of the electronic device 1001. The battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. The communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BLUETOOTH™, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. The antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

Commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

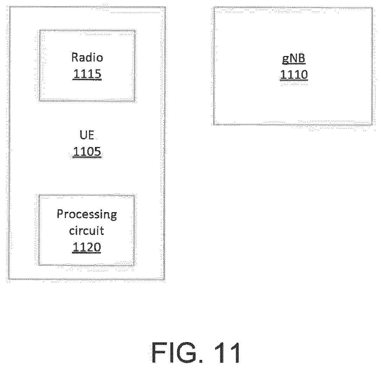

FIG. 11 shows a system including a UE 1105 and a gNB 1110, in communication with each other. The UE may include a radio 1115 and a processing circuit (or a means for processing) 1120, which may perform various methods disclosed herein, e.g., the method illustrated in FIG. 6. For example, the processing circuit 1120 may receive, via the radio 1115, transmissions from the gNB 1110, and the processing circuit 1120 may transmit, via the radio 1115, signals to the gNB 1110.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

**Claims**

1. A method performed by a user equipment, UE (100), in a wireless communication system, the method comprising:

   receiving (602) channel state information, CSI, reporting configuration information (401, 501) with a plurality of sub-configurations for CSI reporting; and
   determining (604) a CSI processing unit for a plurality of spatial adaptation patterns based on the CSI reporting configuration information (401, 501),
   wherein determining the CSI processing unit comprises performing a compilation operation of a number of CSI-reference signal, RS, resources corresponding to each spatial adaptation pattern for the plurality of sub-configurations.

2. The method of claim 1, further comprising measuring a CSI-RS resource for a channel measurement occurring a predetermined number of symbols before a transmission based on the CSI processing unit.

3. The method of claim 1 or 2, further comprising receiving instructions comprising downlink control information, DCI, or a medium access control, MAC, control element, CE, to dynamically change a CSI-RS configuration.

4. The method of any one of claims 1 to 3, further comprising preconfiguring the UE (100) with a plurality of reporting instances, each reporting instance associated with a predefined periodicity for one of the spatial adaptation patterns, wherein each reporting instance adheres to a timing requirement defined by values corresponding to different spatial adaptation patterns.

5. The method of any one of claims 1 to 4, further comprising generating a joint CSI report that includes information for channel quality indicator, CQI, reporting across the plurality of spatial adaptation patterns,
wherein the joint CSI report includes a CQI differential value that is determined relative to a reference CQI associated with a highest power level within the CSI processing unit.

6. The method of any one of claims 1 to 5, wherein the CSI processing unit includes a precoding matrix indicator, PMI, feedback that reuses a basis set reported for a first CSI processing unit in subsequent CSI processing units.

7. The method of claim 6, wherein the PMI feedback includes reporting amplitude and phase coefficients for the subsequent CSI processing units relative to the first CSI processing unit.

8. The method of any one of claims 1 to 7, wherein transmitting the CSI processing unit comprises sending a CSI report including a joint coded field for similar CSI quantities across CSI processing units.

9. The method of any one of claims 1 to 8, further comprising applying a priority rule for a transmission based on the CSI processing unit to prevent transmission based on all CSI processing units,
wherein the priority rule controls transmission based on a spatial adaptation pattern associated with a highest number or a lowest number of antenna ports.

10. A user equipment, UE, comprising:

> a memory device (102), and
> a processor (101) configured to execute instructions stored on the memory device (102), wherein the instructions, when executed, cause the processor (101) to:

>> receive (602) channel state information, CSI, reporting configuration information (401, 501) with a plurality of sub-configurations for CSI reporting; and
>> determine (604) a CSI processing unit for a plurality of spatial adaptation patterns based on the CSI reporting configuration information (401, 501),
>> wherein determining the CSI processing unit comprises performing a compilation operation of a number of CSI-reference signal, RS, resources corresponding to each spatial adaptation pattern for the plurality of sub-configurations.

11. The UE (100) of claim 10, wherein:

> the instructions further cause the processor (101) to measure a CSI-RS resource for a channel measurement occurring a predetermined number of symbols before a transmission based on the CSI processing unit; and/or
> the instructions further cause the processor to receive information comprising downlink control information, DCI, or a medium access control, MAC, control element, CE, to dynamically change a CSI-RS configuration; and/or
> the instructions further cause the processor to preconfigure the UE (100) with a plurality of reporting instances, each reporting instance associated with a predefined periodicity for one of the spatial adaptation patterns, wherein each reporting instance adheres to a timing requirement defined by values corresponding to different spatial adaptation patterns; and/or
> the instructions further cause the processor to generate a joint CSI report that includes information for channel quality indicator, CQI, reporting across the plurality of spatial adaptation patterns, wherein the joint CSI report includes a CQI differential value that is determined relative to a reference CQI associated with a highest power level within the CSI processing unit; and/or
> transmitting the CSI processing unit comprises sending a CSI report including a joint coded field for similar CSI quantities across CSI processing units; and/or
> the instructions further cause the processor (101) to apply a priority rule for a transmission based on the CSI processing unit to prevent transmission based on all CSI processing units, wherein the priority rule controls transmission based on a spatial adaptation pattern associated with a highest number or a lowest number of antenna ports.

12. The UE (100) of claim 10 or 11, wherein the CSI processing unit includes a precoding matrix indicator, PMI, feedback that reuses a basis set reported for a first CSI processing unit in subsequent CSI processing units, and preferably the PMI feedback includes reporting amplitude and phase coefficients for the subsequent CSI processing units relative to the first CSI processing unit.

13. A method performed by a base station (100) in a wireless communication system, the method comprising:

receiving (601) user equipment, UE, capability information from a UE; and

transmitting (602) channel state information, CSI, reporting configuration information (401, 501) with a plurality of sub-configurations for CSI reporting in response to the received UE capability information,

wherein a CSI processing unit is determined (604) by performing a compilation operation of a number of CSI-reference signal, RS, resources corresponding to each spatial adaptation pattern for the plurality of sub-configurations.

14. The method of claim 13, further comprising:
transmitting information comprising downlink control information, DCI, or a medium access control, MAC, control element, CE, to dynamically change a CSI-RS configuration.

15. A base station (100) comprising:

a memory device (102), and

a processor (101) configured to execute instructions stored on the memory device (102), wherein the instructions, when executed, cause the processor (101) to:

receive (601) user equipment, UE, capability information from a UE; and

transmit (602) channel state information, CSI, reporting configuration information (401, 501) with a plurality of sub-configurations for CSI reporting in response to the received UE capability information,

wherein a CSI processing unit is determined (604) by performing a compilation operation of a number of CSI-reference signal, RS, resources corresponding to each spatial adaptation pattern for the plurality of sub-configurations.

100

Controller module
101

Antenna module
103

Storage module
102

FIG. 1

**NR Type-I codebook design**

Terminal selects beam and co-phase (relative phase difference between X-pol antennas) ccefficient

# FIG. 2(a)

**NR Type-II codebook design**

Terminal selects multiple beams, performs amplitude scaling, and phase coefficients for linear combination between the beams

# FIG. 2(b)

| ReportQuantity | Description |
|---|---|
| cri-RI-PMI-CQI cri-RI-LI-PMI-CQI | • UE shall report a preferred precoder matrix for the entire reporting band, or a preferred precoder matrix per subband.<br><br>• This requires csi-IM and codebook configuration. It means it is required to configure CSI-ReportConfig->csi-IM-ResourcesForInterference and CSI-ReportConfig->codebookConfig. |
| cri-RI-i1 | • codebookType ='typeI-SinglePanel' and pmi-FormatIndicator = wideband PMI<br><br>• UE shall report a PMI including a single wideband indication (i1) for the entire CSI reporting band. |
| cri-RI-i1-CQI | • icodebookType ='typeI-SinglePanel' and pmi-FormatIndicator = wideband PMI<br>• UE shall report a PMI including a single wideband indication (i1) for the entire CSI reporting band.<br>• The CQI is calculated based on the reported i1 assuming PDSCH transmission with Np >≥ 1 precoders.<br>• UE assumes that one precoder is randomly selected from the set of Np precoders for each PRG on PDSCH<br>• The PRG for CQI calculation is configured by the higher layer parameter pdsch-BundleSizeForCSI. |
| cri-RI-CQI | • Case 1 : non-PMI-PortIndication is configured:<br>   o   The UE shall report RI corresponding to the configured fields of portindexFor8Ranks.<br>• Case 2 : non-PMI-PortIndication is Not configured<br>   o   the UE assumes that the CSI-RS port indices are associated with ranks. Here rank and layer is {1,2,4,8}.<br>• When calculating the CQI for a rank, the UE shall use the ports indicated for that rank for the selected CSI-RS resource. The precoder for the indicated ports shall be assumed to be the identity matrix scaled 1/sqrt(layer). |

FIG. 3

FIG. 4

502

Trigger state 1:
(multi-CSI report)

ResourceSet1
(multiple CSI-RS
resources)

503

Trigger state 2:
(Single-CSI report)

ResourceSet2
(single CSI-RS
resource)

504

Trigger state 3:
(Single-CSI report)

ResourceSet3
(single CSI-RS
resource)

505

Trigger state 4:
(Single-CSI report)

ResourceSet4
(single CSI-RS
resource)

CSI-ReportConfig:

A-periodic

501

- ReportQuantity (legacy)
- ReportQuantity_2: Multi-
  Resources-RI-PMI-CQI

FIG. 5

```
┌─────────────────────────────┐
│                             │
│      Send UE capabilities   │
│             601             │
│                             │
└─────────────────────────────┘
              │
              ▼
┌─────────────────────────────┐
│                             │
│     Receive CSI-ReportConfig│
│             602             │
│                             │
└─────────────────────────────┘
              │
              ▼
┌─────────────────────────────┐
│                             │
│      Receive CSI request    │
│             603             │
│                             │
└─────────────────────────────┘
              │
              ▼
┌─────────────────────────────┐
│                             │
│  Determine CSI processing unit│
│            (CPU)            │
│             604             │
│                             │
└─────────────────────────────┘
```

# FIG. 6

FIG. 7

FIG. 8

EP 4 478 625 A2

901

P-CSI-RS

902

PUCCH carrying N a-periodic CSI report

903

PUCCH carrying N a-periodic CSI report

T1

T2

T3

time

FIG. 9

FIG. 10

Radio
1115

UE
1105

Processing
circuit
1120

gNB
1110

FIG. 11